(19) Europäisches Patentamt
European Patent Office
Office européen des brevets

(11) Veröffentlichungsnummer: **0 610 800 A2**

# (12) EUROPÄISCHE PATENTANMELDUNG

(21) Anmeldenummer: **94101582.8**

(22) Anmeldetag: **03.02.94**

(51) Int. Cl.5: **C08L 69/00**, C08L 51/04, //(C08L69/00,51:04),(C08L51/04, 69:00)

(30) Priorität: **11.02.93 DE 4304004**

(43) Veröffentlichungstag der Anmeldung: **17.08.94 Patentblatt 94/33**

(84) Benannte Vertragsstaaten: **BE DE ES FR GB IT NL**

(71) Anmelder: **BASF Aktiengesellschaft**
**Carl-Bosch-Strasse 38**
**D-67063 Ludwigshafen (DE)**

(72) Erfinder: **Seelert, Stefan, Dr.**
**Mathaeus-Merian-Ring 24a**
**D-67227 Frankenthal (DE)**
Erfinder: **Schwaben, Hans-Dieter, Dr.**
**Lindenstrasse 6a**
**D-67361 Freisbach (DE)**
Erfinder: **Gausepohl, Hermann, Dr.**
**Medardusring 74**
**D-67112 Mutterstadt (DE)**

## (54) Thermoplastische Formmassen auf der Basis von Polycarbonaten und Styrolcopolymerisaten.

(57) Thermoplastische Formmassen, enthaltend als wesentliche Komponenten

A) 40 bis 85 Gew.-% eines aromatischen Polycarbonats

und

B) 15 bis 60 Gew.-% eines Styrolcopolymerisats, aufgebaut aus

- $B_1$) einer Hartmatrix aus
  - $b_1$) 10 bis 90 Gew.-% mindestens eines vinylaromatischen Monomeren
  - $b_2$) 10 bis 90 Gew.-% eines $C_1$- bis $C_8$-Alkyl(meth)acrylats

  und
- $B_2$) einer Weichphase,

wobei das Styrolcopolymerisat durch Polymerisation in Masse, Lösung oder Masse-Suspension der die Hartmatrix aufbauenden Komponenten $b_1$) und $b_2$) in Gegenwart einer gelösten elastomeren Pfropfgrundlage erhalten wird.

EP 0 610 800 A2

Die vorliegende Erfindung betrifft thermoplastische Formmassen, enthaltend als wesentliche Komponenten

A) 40 bis 85 Gew.-% eines aromatischen Polycarbonats

und

B) 15 bis 60 Gew.-% eines Styrolcopolymerisats, aufgebaut aus

$B_1$) einer Hartmatrix aus

$b_1$) 10 bis 90 Gew.-% mindestens eines vinylaromatischen Monomeren

$b_2$) 10 bis 90 Gew.-% eines $C_1$- bis $C_8$-Alkyl(meth)acrylats

und

$B_2$) einer Weichphase,

wobei das Styrolcopolymerisat durch Polymerisation in Masse, Lösung oder Masse-Suspension der die Hartmatrix aufbauenden Komponenten $b_1$) und $b_2$) in Gegenwart einer gelösten elastomeren Pfropfgrundlage erhalten wird.

Außerdem betrifft die Erfindung die Verwendung dieser thermoplastischen Formmassen zur Herstellung von Fasern, Folien und Formkörpern sowie die hierbei erhältlichen Formkörper aus den thermoplastischen Formmassen.

Thermoplastische Formmassen auf der Basis von Polycarbonaten und Styrolcopolymerisaten finden aufgrund ihres Eigenschaftsprofils in den verschiedensten Bereichen Verwendung, beispielsweise im Automobilbau, im Bausektor, für Büromaschinen sowie in elektrischen Geräten und Haushaltsgeräten.

Mischungen aus Polycarbonaten und kautschukmodifizierten Polymeren wie ABS (Acrylnitril/Butadien/Styrol) oder ASA (Acrylnitril/Styrol/Alkylacrylat) sind bekannt. So beschreibt die US-A 4 526 926 Mischungen aus Polycarbonaten und ABS-Copolymerisaten, die nach dem Masse-, Lösung- oder Masse-Suspensionsverfahren hergestellt wurden. Diese Formmassen weisen jedoch eine gelbliche bis bräunliche Eigenfarbe auf, d.h. zum Erreichen heller Einfärbungen ist es notwendig, einen großen Anteil an Weißpigmenten zuzugeben, woraus sich eine Verschlechterung der mechanischen Eigenschaften ergibt. Weiterhin sind die Fließfähigkeiten dieser Formmassen für einige Anwendungen nicht ausreichend.

In der DE-A 22 64 104 sind Mischungen aus Polycarbonaten, Copolymerisaten aus einem vinylaromatischen Monomer, einem (Meth)Acrylat und einem Dien sowie nicht kautschukmodifizierten Copolymerisaten aus vinylaromatischen Monomeren beschrieben, wobei die Copolymerisate nach dem Emulsionsverfahren hergestellt werden. Die Nachteile solcher Mischungen liegen darin, daß durch den Zusatz der in Emulsion hergestellten Copolymerisate zum einen die Fließfähigkeit der Formmassen abnimmt und zum anderen die Steifigkeit ganz erheblich reduziert wird.

Aufgabe der vorliegenden Erfindung war es daher, thermoplastische Formmassen zur Verfügung zu stellen, die die genannten Nachteile nicht aufweisen und insbesondere eine gute Fließfähigkeit sowie eine sehr gute Eigenfarbe aufweisen.

Die Aufgabe wird erfindungsgemäß gelöst durch die eingangs definierten thermoplastischen Formmassen. Außerdem wurde die Verwendung dieser thermoplastischen Formmassen zur Herstellung von Fasern, Folien und Formkörpern sowie die hierbei erhältlichen Formkörper aus den thermoplastischen Formmassen gefunden.

Als Komponente A) enthalten die erfindungsgemäßen thermoplastischen Formmassen 40 bis 85 Gew.-%, vorzugsweise 45 bis 75 Gew.-%, insbesondere 55 bis 65 Gew.-% eines aromatischen Polycarbonats.

Geeignete Polycarbonate sind beispielsweise solche auf Basis von Diphenolen der allgemeinen Formel II

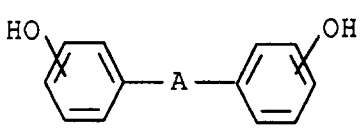

II

worin A eine Einfachbindung, eine $C_1$- bis $C_3$-Alkylen-, eine $C_2$- bis $C_3$-Alkyliden-, eine $C_3$- bis $C_6$-Cycloalkylidengruppe, sowie -S- oder -$SO_2$- bedeutet.

Bevorzugte Diphenole der Formel II sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan.

Sowohl Homopolycarbonate als auch Copolycarbonate sind als Komponente A) geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Weiterhin können die als Komponente A) geeigneten Polycarbonate an den aromatischen Einheiten ein- bis dreifach mit Halogenatomen, bevorzugt mit Chlor und/oder Brom, substituiert sein. Besonders bevorzugt sind jedoch halogenfreie Verbindungen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ - (Gewichtsmittelwert) von 10 000 bis 200 000, vorzugsweise von 20 000 bis 80 000.

Die Diphenole der allgemeinen Formel II sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782.)
Geeignete Kettenabbrecher sind beispielsweise Phenol, p-tert.-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenyl, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Weitere geeignete Polycarbonate sind solche auf Basis von Hydrochinon oder Resorcin.

Mischungen verschiedener Polycarbonate können ebenfalls als Komponente A) eingesetzt werden.

Als Komponente B) enthalten die erfindungsgemäßen thermoplastischen Formmassen 15 bis 60 Gew.-%, bevorzugt 25 bis 55 Gew.-%, insbesondere 35 bis 45 Gew.-% eines Styrolcopolymerisats,
aufgebaut aus

$B_1$) einer Hartmatrix aus

$b_1$) 10 bis 90 Gew.-%, vorzugsweise 30 bis 70 Gew.-%, insbesondere 40 bis 60 Gew.-% mindestens eines vinylaromatischen Monomeren

$b_2$) 10 bis 90 Gew.-%, vorzugsweise 30 bis 70 Gew.-%, insbesondere 40 bis 60 Gew.-% eines $C_1$- bis $C_8$-Alkyl(meth)acrylats

und

$B_2$) einer Weichphase,

wobei das Styrolcopolymerisat durch Polymerisation in Masse, Lösung oder Masse-Suspension der die Hartmatrix aufbauenden Komponenten $b_1$) und $b_2$) in Gegenwart einer gelösten elastomeren Pfropfgrundlage erhalten wird.

Als Komponente $b_1$) werden vorzugsweise Styrol oder substituierte Styrole der allgemeinen Formel I,

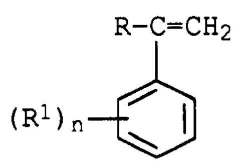

I

wobei R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat, eingesetzt.

Besonders bevorzugt werden Styrol, $\alpha$-Methylstyrol, p-Methylstyrol oder deren Mischungen verwendet.

Als Komponente $b_2$) werden vorzugsweise $C_1$- bis $C_4$-Alkylmethacrylate eingesetzt, insbesondere Methylmethacrylat.

Dieser Gehalt an Comonomeren $b_2$) kann am Fertigprodukt und an der Hartmatrix leicht analytisch z.B. über eine Sauerstoffgehaltsbestimmung ermittelt werden. Zur Bestimmung des Comonomerengehaltes der Hartmatrix wird das Polymerisat bei 25 °C in Toluol gelöst, der unlösliche Gelgehalt in einer Zentrifuge bei 30 000 g abgeschleudert und die überstehende klare Flüssigkeit, die jetzt nur noch die Hartmatrix $B_1$) gelöst enthält, dekantiert, eingedampft und am Rückstand dann anschließend in einer Elementaranalyse der Sauerstoffgehalt bestimmt.

Die Molmasse der Hartmatrix liegt zwischen 100 000 und 250 000, bevorzugt zwischen 150 000 und 200 000.

Die Weichphase $B_2$) liegt fein dispergiert in Form sog. Kautschukteilchen in der Hartmatrix $B_1$) vor.

Die Gegenwart der Weichphase und die Form der dispergierten Kautschukteilchen kann z.B. durch eine elektronenmikroskopische Aufnahme an kontrastierten Dünnschnitten der Formmasse nachgewiesen werden.

Die Form und Größe der Kautschukpartikel in schlagzähmodifizierten Styrolpolymerisaten kann stark variieren. Dies ist z.B. bei B.J. Schmitt in "Angew. Chem." 91 (1979) S. 286-309 und A. Echte in "Die Angew. Makromol. Chem." 58/58 (1977) S. 175-198 beschrieben.

Die Kautschukpartikel der Komponente B) liegen entweder in Form sogenannter Kapselteilchen oder sogenannter Zellenteilchen vor. Der mittlere Durchmesser (Volumenmittel) dieser Teilchen liegt dabei zwischen 100 und 2000, bevorzugt zwischen 200 bis 1000 nm, insbesondere zwischen 250 bis 800 nm.

Die Weichphase $B_2$) ist aufgebaut aus einer elastomeren Pfropfgrundlage und eingeschlossenen sog. okkludierten und gepfropften Copolymeren aus den die Hartmatrix $B_1$) aufbauenden Monomeren $b_1$) und $b_2$).

Als elastomere Pfropfgrundlagen werden die üblicherweise für die Schlagzähmodifizierung von Styrolpolymerisaten gebräuchlichen natürlichen und synthetischen Kautschuke wie z.B. Polybutadiene, Polyisoprene oder Mischpolymerisate von Styrol und Butadien verwendet, die eine Glasübergangstemperatur unter -20 °C besitzen. Im Sinne der vorliegenden Erfindung als besonders vorteilhaft sind solche Mischpolymerisate aus Styrol und Butadien, bei denen ein Teil des Styrols und des Butadiens blockförmig vorliegen und der Gesamtstyrolgehalt zwischen 20 und 60 Gew.-%, insbesondere zwischen 30 und 50 Gew.-% liegt und das Gewichtsmittel der Molmasse zwischen 100 000 und 300 000, bevorzugt zwischen 150 000 und 250 000 liegt.

Der Gehalt an elastomerer Pfropfgrundlage kann mittels einer Titration (Bestimmung der Iodzahl) bestimmt werden. Er liegt, bezogen auf die Komponente B), zwischen 3 und 25 Gew.-%, bevorzugt zwischen 5 und 20 Gew.-% und insbesondere zwischen 7 und 17 Gew.-%.

Die weiteren Bestandteile der Weichphase, nämlich das okkludierte und das gepfropfte Copolymere, können mit einfachen analytischen Methoden nur als Summe erfaßt und nachgewiesen werden, und zwar als Differenz zwischen Gelgehalt und Elastomergehalt.

Die Komponente B) wird hergestellt durch Polymerisation der Monomeren in Gegenwart einer gelösten elastomeren Pfropfgrundlage. Dabei können bis zu 25 Gew.-% eines Lösungsmittels zugesetzt werden. Geeignet hierfür sind aromatische Kohlenwasserstoffe wie z.B. Toluol, Ethylbenzol oder Xylol. Bevorzugt ist das Ethylbenzol. Die Polymerisation kann entweder kontinuierlich oder absatzweise erfolgen. Ein kontinuierliches Verfahren ist in der DE-A-17 70 392 und ein absatzweises in der DE-A-26 13 352 hinreichend beschrieben.

Als Polymerisationsbeschleuniger können organische Peroxide verwendet werden. Hier kommen Alkyl- oder Acylperoxide, Hydroperoxide, Peroxiester oder Peroxicarbonate in Frage. Vorzugsweise verwendet man pfropfaktive Initiatoren wie Dibenzoylperoxid, Dicumylperoxid, t-Butylperoxi-2-ethylhexanoat, t-Butylperpivalat, t-Butylperneodecanoat oder 1,1-Di-(t-butylperoxi)-3,3,5-trimethylcyclohexan. Diese Initiatoren werden, bezogen auf die Monomeren $b_1$) und $b_2$), in Mengen von 0,005 bis 0,2 Gew.-% eingesetzt.

Als Molekulargewichtsregler können die üblicherweise eingesetzten Merkaptane mit 4 bis 18 C-Atomen eingesetzt werden. Besonders bewährt haben sich das n-Butyl, das n-Octyl sowie das n- und t-Dodecylmercaptan. Diese Merkaptane werden in Mengen von 0,01 bis 0,3 Gew.-% bezogen auf die Monomeren $b_1$) und $b_2$) eingesetzt. Die Polymerisation erfolgt in an sich bekannter Weise dadurch, daß die Lösung des Kautschuks in der Monomerenmischung, evtl. in Gegenwart des indifferenten Lösungsmittels, erhitzt wird. Polymerisationsbeschleuniger und Molekulargewichtsregler können entweder zu Beginn oder im späteren Verlauf der Polymerisation zugegeben werden. Wenn pfropfaktive Initiatoren verwendet werden, dann ist es vorteilhaft, diese vor Beginn der Polymerisation zuzusetzen.

Die polymerisierende Kautschuklösung (gelöste elastomere Pfropfgrundlage) ist zunächst einphasig. Kurz nach Beginn der Polymerisation trennt sich die Lösung in zwei Phasen, von denen zunächst die Lösung des Kautschuks in der Monomeren/Lösungsmittel-Mischung die kohärente Phase bildet, während die zweite, eine Lösung des Copolymeren in der Monomeren/Lösungsmittelmischung, in der ersten suspendiert bleibt. Mit steigendem Umsatz vermehrt sich unter Monomerenverbrauch die zweite Phase, d.h. es wird ständig zusätzliches Copolymerisat gebildet; dabei tritt dann ein Wechsel der Phasenkohärenz auf (Phaseninversion).

Neben diesem Vorgang läuft eine Pfropfreaktion ab, bei der Pfropfäste aus Copolymerisat mit den Kautschukmolekülen chemisch verknüpft werden. Dieser Vorgang ist bekannt und z.B. bei Fischer, "Die Angew. Makromol. Chem." 33 (1973) S. 35-74, ausführlich beschrieben.

Während der Polymerisation, insbesondere während des ersten Umsatzdrittels, der sog. Vorpolymerisation, muß gut gerührt werden. Es ist bekannt, wie in dieser Phase der Polymerisation die gewünschte Größe der Weichphasenpartikel eingestellt wird. Die beanspruchte Einstellung der mittleren Teilchengröße auf $d_{50}$-Werte zwischen 100 nm und 2000 nm erfolgt durch Scherung nach der Phaseninversion.

Diese Scherung, mit der die zu polymerisierende Lösung beansprucht wird, ist in hohem Maße abhängig von der Anlage, in der die Polymerisation erfolgt. Daher sind bei der Übertragung des Verfahrens von einer Anlage in eine andere, z.B. von einer kleineren in eine größere, oder von einer absatzweise in eine kontinuierlich betriebene stets einige orientierende Versuche notwendig, um die Scherbedingungen herauszufinden, die zu mittleren Teilchengrößen im günstigen Bereich führen. Bei einer solchen Übertragung müssen alle die Scherung der polymerisierenden Lösung beeinflussenden Parameter, darunter insbesondere die Art des Rührwerks, die Rührgeschwindigkeit, die Geometrie des Rührwerks, seine Eintauchtiefe in die polymerisierende Lösung, Einbauten in den gerührten Reaktoren, wie z.B. Strombrecher etc. berücksichtigt werden.

Die Polymerisation erfolgt im Temperaturbereich zwischen 50 und 200 °C, bevorzugt zwischen 70 und 190 °C und insbesondere zwischen 90 und 180 °C.

Weiterhin können die erfindungsgemäßen thermoplastischen Formmassen bis zu 50 Gew.-%, insbesondere bis zu 20 Gew.-% faser- oder teilchenförmige Füllstoffe oder deren Mischungen enthalten. Dabei handelt es sich vorzugsweise um kommerziell erhältliche Produkte. Verarbeitungshilfsmittel und Stabilisatoren wie UV-Stabilisatoren, Schmiermittel und Antistatika werden üblicherweise in Mengen von 0,01 bis 5 Gew.-% verwendet, Verstärkungsmittel wie Kohlenstoffasern und Glasfasern hingegen von 5 bis 40 Gew.-%.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem seien Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagstoffe, die elektromagnetische Wellen abschirmen, genannt. Insbesondere kommen Al-Flocken (K 102 der Fa. Transmet) für EMI-Zwecke (electro-magnetic interference) in Betracht; ferner Abmischen dieser Masse mit zusätzlichen Kohlenstoffasern, Leitfähigkeitsruß oder nickelbeschichteten C-Fasern.

Als weitere Zusatzstoffe seien beispielsweise genannt: Farbstoffe, Pigmente und Antioxidantien.

Die erfindungsgemäßen thermoplastischen Formmassen sind jedoch acrylnitrilfrei.

Die Herstellung der erfindungsgemäßen thermoplastischen Formmassen erfolgt nach an sich bekannten Verfahren durch Mischen der Komponenten. Bei der Verwendung von Zusatzstoffen können diese zu den Komponenten A) oder B) gegeben werden oder auch beim Mischen der Komponenten A) und B) zugegeben werden.

Vorzugsweise geschieht das Mischen der Komponenten bei Temperaturen von 150 bis 300 °C durch gemeinsames Verwalzen, Kneten oder Extrudieren.

Die erfindungsgemäßen thermoplastischen Formmassen zeichnen sich durch ein insgesamt ausgewogenes Eigenschaftsspektrum aus, insbesondere durch gute Fließfähigkeit und sehr gute Eigenfarbe. Sie eignen sich zur Herstellung von Fasern, Folien und Formkörpern.

Beispiele

Für die Herstellung der erfindungsgemäßen Formmassen und der Vergleichsmassen wurden folgende Bestandteile verwendet:

Komponente A:

Aromatisches Polycarbonat auf Basis Bisphenol A mit einer Viskositätszahl VZ = 61,6 ml/g (gemessen in 0,5 gew.-%iger Lösung in Methylenchlorid bei 23 °C), Makrolon® der Fa. Bayer.

Komponente B I:

Die Herstellung der Komponente B I erfolgte nach dem Masse-Suspensions-Prozeß in einer Zwei-Kessel-Kaskade, bestehend aus den Kesseln 1 und 2, jeweils ausgerüstet mit Ankerrührern. In Kessel 1 (ca. 20 l Fassungsvermögen) wurde eine Lösung aus 1,51 kg eines Styrol-Butadien-Zweiblockcopolymeren aus

60 % Styrol und 40 % Butadien (Buna BL 6533 der Firma Bayer), 12 g eines Reglers (t-Dodecylmerkaptan), 1,8 g eines Starters (1,1-Di-t-butylperoxy-3,3,5-trimethylcyclohexan) und 15 g eines handelsüblichen Antioxidans (Irganox® 1076 der Firma Ciba-Geigy) in 5,19 kg Styrol, 4,97 kg Methylmethacrylat und 0,32 kg Schmiermittel auf Basis eines Phthalsäureesters (Palationol® Z der BASF Aktiengesellschaft) vorgelegt. Unter Rühren wurde die Mischung bis zu einem Umsatz von 35 ± 1 % polymerisiert.

Im Kessel 2 (Fassungsverögem ca. 40 l) wurden 18 kg Wasser, 0,18 kg eines Schutzkolloids auf Basis von Ethylenoxid und 18 g Natriumpyrophosphat vorgelegt und auf ca. 100 °C gebracht. Nachdem in Kessel 1 der Umsatz auf den Wert von 35 ± 1 % gestiegen war (dies wurde durch eine Feststoffgehaltsbestimmung an Proben ermittelt, die dem Kessel 1 entnommen worden waren), wurden 0,1 Gew.-% Dicumylperoxid, bezogen auf die Gesamtmenge, zugesetzt. Die Rührerdrehzahl im Kessel 2 wurde dann auf 300 $min^{-1}$ eingestellt und der Inhalt von Kessel 1 mittels Stickstoff über ein Verbindungsrohr innerhalb von 15 Minuten in Kessel 2 getrieben. In der derart hergestellten wäßrigen Suspension wurde anschließend 6 Stunden bei einer Temperatur von 130 °C und 6 Stunden bei einer Temperatur von 140 °C bis zu einem Umsatz von mehr als 99 % bezogen auf die Monomeren polymerisiert. Nach dieser Zeit wurde der Kesselinhalt auf 30 °C abgekühlt, abgelassen und die erhaltene Probe gründlich mit Wasser gewaschen und anschließend 24 Stunden im Vakuumtrockenschrank bei 60 °C und 25 mbar getrocknet. Danach erfolgte eine Konfektionierung über einen Extruder (ZSK 30, Fa. Werner & Pfleiderer), um das Produkt in Granulatform zu bringen.

Komponente B II:

Im Emulsionsverfahren hergestelltes Copolymerisat aus Styrol, Methylmethacrylat und Butadien mit ca. 40 Gew.-% Butadien und Teilchengröße ca. 100 nm, Kane Ace® B 28 A der Fa. Kanegafuchi.

Komponente B III:

Nach dem Lösungsverfahren hergestelltes ABS (Acrylnitril-Butadien-Styrol-Kautschuk-Copolymer) : Magnum 3504 der Fa. DOW.

Komponente B IV:

Ein Acrylnitril-Styrol-Acrylat-Kautschuk-Copolymer (ASA), hergestellt nach dem in der EP-B 6503 beschriebenen Verfahren in Beispiel 1, wobei als Hartkomponente ein Styrol-Acrylnitril-Copolymeres (SAN) mit einem Gewichtsverhältnis von Styrol zu Acrylnitril von 81 : 19 eingesetzt wurde.

Die Komponente A) wurde mit den jeweiligen Komponenten B) auf einem Zweiwellenextruder (ZSK 30 der Firma Werner & Pfleiderer) bei 250 °C gemischt, als Strang ausgetragen, gekühlt und granuliert.

Die Zusammensetzungen der Beispiele und Vergleichsversuche sowie die Ergebnisse deren Prüfungen sind in der Tabelle zusammengestellt.

Die zur Charakterisierung der Mischungen verwendeten Parameter wurden wie folgt bestimmt:
Der Volumenfließindex MVI nach DIN 53 735
die Vicattemperatur VST/B nach DIN 53 460
der Zug-Elastizitätsmodul nach DIN 53 457
die Reißdehnung nach DIN 53 455
die Kerbschlagzähigkeit nach DIN 53 453
die multiaxiale Zähigkeit als Durchstoßarbeit (Gesamtarbeit $W_{ges}$) nach DIN 53 443 Teil 2
und
der Yellowness-Index nach ASTM D 1925.

Die erfindungsgemäßen Formmassen (Beispiele 1 bis 3) zeichnen sich neben guter Wärmeformbeständigkeit und einer sehr guten Zähigkeit durch eine gute Steifigkeit, hervorragende Fließfähigkeit sowie durch eine exzellente Eigenfarbe (Yellowness-Index in negativen Bereich) aus.

Die Vorteile gegenüber dem in Emulsion hergestellten MBS-Polymer (B II) liegen besonders in der Fließfähigkeit und der Steifigkeit, wobei diese Vorteile sowohl auftreten, wenn der gleiche Butadien-Gehalt eingesetzt wird (Vergleichsversuch V2) als auch wenn die gleiche Masse zugegeben wird (Vergleichsversuch V1) . Beim Vergleich mit dem Blend aus Polycarbonat und in Lösung hergestelltem ABS (Vergleichsversuch V3) und mit dem Blend aus Polycarbonat und ASA (Vergleichsversuch V4) ist besonders der völlig fehlende Gelbstich herauszustellen.

Tebelle

Zusammensetzung und Eigenschaften der erfindungsgemäßen und nicht erfindungsgemäßen Formmassen

| Beispiele Vergleichsversuche | | 1 | 2 | 3 | V1 | V2 | V3 | V4 |
|---|---|---|---|---|---|---|---|---|
| A | [Gew.-%] | 60 | 55 | 65 | 60 | 91 | 60 | 60 |
| B I | [Gew.-%] | 40 | 45 | 35 | | | | |
| B II | [Gew.-%] | | | | 40 | 9 | | |
| B III | [Gew.-%] | | | | | | 40 | |
| B IV | [Gew.-%] | | | | | | | 40 |
| MVI 230/5 | [ml/10min] | 5,3 | 7,1 | 4,1 | 0,3 | 1,8 | 4,0 | 2,9 |
| MVI 260/5 | [ml/10min] | 20 | 24 | 18 | 1 | 9 | 16 | 13 |
| gespritzte Probekörper 260°C: | | | | | | | | |
| Vicat VST/B | [°C] | 112 | 106 | 120 | 115 | 142 | 121 | 117 |
| Zug-E-Modul | [$N/mm^2$] | 2430 | 2400 | 2424 | 1319 | 2144 | 2341 | 2180 |
| Reißdehnung | [%] | 109 | 53 | 78 | 105 | 111 | 59 | 124 |
| Kerbschlagzähigkeit | [$kJ/m^2$] | 34 | 37 | 34 | 23 | 37 | 38 | 47 |
| Durchstoßarbeit ($W_{ges}$) | [Nm] | 80 | 72 | 79 | 45 | 75 | 77 | 78 |
| gespritzte Probekörper 280°C: | | | | | | | | |
| Kerbschlagzähigkeit | [$kJ/m^2$] | 38 | 43 | 36 | 23 | 37 | 40 | 42 |
| Durchstoßarbeit ($W_{ges}$) | [Nm] | 74 | 68 | 80 | 43 | 71 | 73 | 71 |
| Yellowness-Index | | -5,6 | -4,8 | -5,6 | 5,2 | 2,0 | 6,8 | 26,1 |

## Patentansprüche

1. Thermoplastische Formmassen, enthaltend als wesentliche Komponenten

A) 40 bis 85 Gew.-% eines aromatischen Polycarbonats
und
B) 15 bis 60 Gew.-% eines Styrolcopolymerisats, aufgebaut aus
$B_1$) einer Hartmatrix aus
$b_1$) 10 bis 90 Gew.-% mindestens eines vinylaromatischen Monomeren
$b_2$) 10 bis 90 Gew.-% eines $C_1$- bis $C_8$-Alkyl(meth)acrylats
und
$B_2$) einer Weichphase,
wobei das Styrolcopolymerisat durch Polymerisation in Masse, Lösung oder Masse-Suspension der die Hartmatrix aufbauenden Komponenten $b_1$) und $b_2$) in Gegenwart einer gelösten elastomeren Pfropfgrundlage erhalten wird.

**2.** Thermoplastische Formmassen nach Anspruch 1, dadurch gekennzeichnet, daß sie
die Komponente A) in einer Menge von 45 bis 75 Gew.-% und
die Komponente B) in einer Menge von 25 bis 55 Gew.-%
enthalten.

**3.** Thermoplastische Formmassen nach den Ansprüchen 1 bis 2, dadurch gekennzeichnet, daß die Hartmatrix $B_1$) aufgebaut ist aus
30 bis 70 Gew.-% $b_1$) und
30 bis 70 Gew.-% $b_2$).

**4.** Thermoplastische Formmassen nach den Ansprüchen 1 bis 3, dadurch gekennzeichnet, daß als Komponente $b_1$) Styrol oder substituierte Styrole der allgemeinen Formel I,

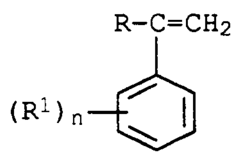

I

wobei R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat, eingesetzt werden.

**5.** Thermoplastische Formmassen nach den Ansprüchen 1 bis 4, dadurch gekennzeichnet, daß als Komponente $b_2$) $C_1$- bis $C_4$-Alkylmethacrylate eingesetzt werden.

**6.** Thermoplastische Formmassen nach den Ansprüchen 1 bis 5, dadurch gekennzeichnet, daß die Weichphase $B_2$) aufgebaut ist aus einer elastomeren Pfropfgrundlage und eingeschlossenen und gepfropften Copolymeren aus den die Hartmatrix $B_1$) aufbauenden Komponenten $b_1$) und $b_2$).

**7.** Thermoplastische Formmassen nach den Ansprüchen 1 bis 6, dadurch gekennzeichnet, daß als elastomere Pfropfgrundlage Polybutadiene, Polyisoprene oder Mischpolymerisate von Styrol und Butadien eingesetzt werden.

**8.** Verwendung der thermoplastischen Formmassen gemäß den Ansprüchen 1 bis 7 zur Herstellung von Fasern, Folien und Formkörpern.

**9.** Formkörper, erhältlich aus den thermoplastischen Formmassen gemäß den Ansprüchen 1 bis 7 als wesentliche Komponente.